# EUROPEAN PATENT SPECIFICATION

(11) **EP 1 924 487 B1**
(45) Date of publication and mention of the grant of the patent: **01.07.2009**
(21) Application number: 05781689.4
(22) Date of filing: 29.08.2005
(51) Int. Cl.: B62D 55/265, B63B 59/10

(54) **ROBOT FOR THE TREATMENT AND/OR WORKING ON STEEL EXTERNAL STRUCTURES**
ROBOTER ZUR BEHANDLUNG UND/ODER BEARBEITUNG VON EXTERNEN STRAHLKONSTRUKTIONEN
ROBOT POUR LE TRAITEMENT ET/OU LE TRAVAIL DE STRUCTURES EXTERNES EN ACIER

(43) Date of publication of application: 28.05.2008
(73) Proprietor: SIN ANDAMIOS ALMANSA, SL, 02640 ALmansa (Albacete) (ES)
(72) Inventor: NAVALON GARCIA, Francisco Andrés, E-02640 Almansa (ES)
(74) Representative: D'Agostini, Giovanni
(86) International application number: PCT/EP2005/009282
(87) International publication number: WO 2007/025553

(56) References cited:
- EP-A- 0 248 659
- GB-A- 978 600
- GB-A- 1 545 232
- GB-A- 2 103 162
- US-A- 5 435 405

## Description

### Object

This invention relates to a robot for the treatment and/or working of external surfaces or parts in large steel structures according to the pre-characterizing part of the main claim. Such a robot is described in document GB 978,600.

### Technical Field

The technical field relates to large extended structures, such as for example the keel of a ship, the façade of a steel building, etc.

The types of treatment and working can be very different, such as for example:
- external maintenance, e.g. the cleaning of the surfaces;
- surface treating, e.g. abrasive brush or blasting and/or painting of the surfaces;
- welding, boring, bolting, etc.

However, other treatments and works are not excluded, and therefore the aforementioned examples should not be considered as limitative.

Working and maintenance in large steel structures is usual, eg. keel of a ship, skyscrapers and similar buildings, hull overhanging structures, stadium vaulting surfaces, etc.

The definition of treatment and/or working of external surfaces or part of them is understood to mean any type of work attainable from outside the surface, outside is intended not only to indicate the exterior of the structure but also the inside of the structure, the external part described herein mainly refers to the surface to be treated or to be worked.

### Background Art and Problems or Drawbacks of the State of the Art

In the present state of the art the treatment technique and/or working of external surfaces or parts in steel structures is well known in skyscraper maintenance, ships, etc. which require periodic cleaning and painting. Furthermore, the maintenance of a building in a large vault is not easy for operators and is only possible with the use of scaffolding structures.

Nowadays, this operation is carried out using movable bridge means that are lifted and lowered and moved along the entire surface of the structure with workers on board.

The periodic maintenance of the keel and hull of ships that must be almost annually sanded for the removal of marine scales and then revarnished etc. is also known. These operations also have to be carried out using complex and expensive means that involve the additional cost of employing specialized workers.

The need to work metallic surfaces for abrasive blasting or painting of structures is also known.

Furthermore, workers suspended along the surfaces are always exposed to the danger of accidents and falling.

To avoid the above problems Sin Andamios Robot is know from EP 04025163.3 (published as EP-A-1 650 116, 26.04.2006), that discloses a track-laying robot whose track-links are equipped with magnetic soles and wherein the driving means consist in two opposite and independent motor means, remote-controlling the two opposite tracks independently. In this way the robot can be moved in any direction moving one or the other track of the robot.

Other caterpillar magnetic-path robots are known, see US-A-5884642, JP-A-02092788, JP-A-2001270478, EP-A-0248659, JP-A-03231079, GB-A-2203108

The above solutions have the problem of being difficult to move in any direction.

Furthermore the existing magnetic-track robots are limited in moving on surfaces that are not perfectly plane. In particular when surface change is not plane, magnetic track adherence is reduced with the danger that the robot may fall.

GB-A-978600A discloses an apparatus carrier for using on steel wall, having two endless chains 8,9 respectively operated by two motors 6, 7, that are hinged longitudinally in an intermediate position (4) to allow working also on curved surfaces. GB-A-2103162 discloses an apparatus moving on wall using three on tandem-oscillating of endless track crawlers per side of the vehicle apparatus, the oscillation of the endless tracks being obtained for use in not flat surfaces. US-A-5435405 discloses a reconfigurable mobil vehicle with magnetic tacks having four outriggers 830 alternatively mounted to the rear of the vehicle (two in front and two in back).

EP-A-0248659 discloses a self propelled magnetic track vehicle wherein each of the track assemblies 11 end 12 is mounted on a respective pair of arms 17 and 18 projecting laterally from the body 10.

GB-A-1545232 discloses an improved device for surface treatment in which the two tracks 2 are sideways hinged by respective sideways arms 24 able to move on curved surfaces (fig.8).

### Aim of the Present Invention

The aim of the present invention is to conceive an improved magnetic-path track robot in a new form of realization in order to allow easy, improved and safe movement along surfaces that are also not plane or small portions of surfaces having non-magnetic parts.

### Solution to the Problem and Disclosure of the Invention

The problem is solved with the characteristics of the main claim.

The sub-claims relate to preferred solutions.

### Advantages

The use of two completely independent mono-track caterpillars hinged sideways to each other not only allow easy movement along the surface in any direction, but also improved adherence of both tracks also in surfaces that are not flat, one being free to incline with respect to the other.

In this way the robot can climb on any ferromagnetic steel surface that constitutes the swinging majority of steel structures.

The movement takes place without hangings and the robot is capable of moving vertically along the steel stanchions of a skyscraper, along the horizontal levels of said vertical surfaces of the steel structures, like a spider, both vertically along the iron beams of the columns and horizontally along the steel iron beams of the levels.

The latter is also true for interventions on the inside of structures or buildings.

Further improved and without movement limitations, it is capable of moving one the external surfaces of the hulls or keels of ships, both for maintenance in the shipyard as well as for urgent interventions at sea, by means of a submergible feature of the robot, that has the capacity to function below sea level if the robot motor structure provided is completely water-tight.

As conceived the robot can turn 360° without having to displace itself, moving only one of the side units or both tracks in the opposite direction. Consequently, it can move vertically and horizontally and also at right-angles along the stanchions or along the levels for façade cleaning and maintenance.

Moreover, it is also capable of carrying out extraordinary working processes in buildings, such as for example the electro-welding of a structure without the presence of workers.

### Description of a Preferred Embodiment

The invention will be better understood with the following description of a preferred example of robot and with the attached figures wherein:

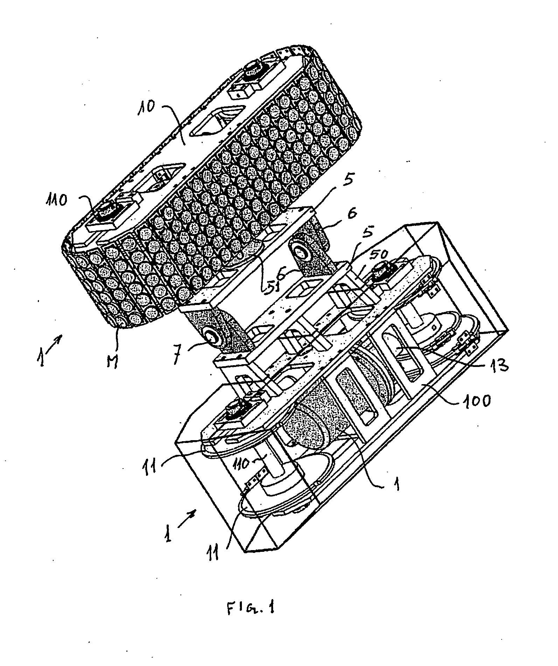

Fig.1 represents the schematic perspective overview of the robot, with one track without cover structure and the other track with respective cover in transparent representation, to show (without magnetic plates) the internal structure of the motor means and respective double couple of opposed wheels, one of them toothed for driving the magnetic-sole chain, operated by said motor-means and the other free rotating;

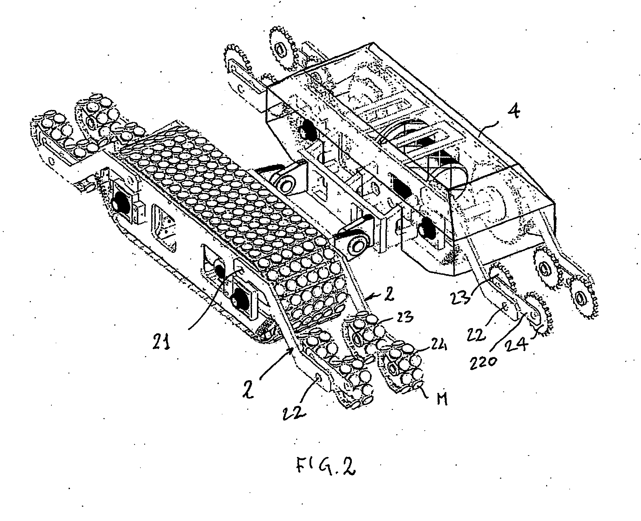

Fig.2 represents a perspective schematic view of the robot with two opposed elastic advance track-arms, allowing the robot to climb on different tilted surfaces having on their extremity also magnetic-sole couple of free-rotating wheels for adherence on the front or rear surfaces slightly distant from the core robot and also not perfectly in plane with respect to the surface below the body of the robot.

The provided remote-control electronic apparatus is not disclosed and can be any of the known art.

Working structures above the robot are not disclosed as being any of the desired types of work. Therefore, power-operated accessories can be provided,

Eg. brushes, cleaning means, articulated arms for surface workings (cleaning, washing, spraying, painting, scaling etc.), all means and devices being applied on the said robot.

### Detailed Description of the Figure

As per Figure 1 and as claimed the robot is structured with two mono-track units (1) placed in parallel-tandem and hinged sideways-longitudinally to each other by a respective couple of hinging-means (6-7) connected to a side-plate (5) joined to the respective frame (10) of each unit (1), one plate (5) being able to be inclined by orthogonal hinge means (51) in order to allow one unit to oscillate or incline with respect to the other in any direction.

Each unit (1) has a frame with two opposed plates (10) with spacers (100), to realize a case that includes two opposed axles (110), one of them driven by a motor means (12) having a reducer means (13).

Each axle (110) supports two track wheels (11), realizing a front and rear couple of wheels that support a magnetic-sole tract. The motor axle has toothed wheels for driving the magnetic-sole chain (M).

A case or hull (4) covers the upper part of the unit.

In this way it is clear that one unit can incline sideways from the other to achieve improved adherence.

In front of each unit (1) an arm structure is provided (2), the arm structure (2) is elastically pressed against the pathway-floor for better adherence by undisclosed spring means. At the end of the arm structure (2) at least a couple of free rotating wheels are provided (23-24) with respective magnetic soles (M).

The best solution provided a tandem-double couple free oscillating structure (22-220-23-24) supporting a respective magnetic tract (M). The same structure being provided front and rear.

In this way a the secure climbing of the robot is allowed also in forward or rearward direction to move along different tilted surfaces or to overcome obstacles that are not flat, eg. welding or bolting etc., the magnetic contact surface being better assured in this articulated structure.

## Claims

1. Robot for treating and/or working of surfaces or external parts in large steel structures, said robot being of the tracked type for its movement with magnetic soles (M) on the tracks of said track-laying robot, comprising two independent drive-units (1) hinged longitudinally sideways to each other in an intermediate position with respective side-hinging means (6-7) said side-hinging means comprising at least a longitudinal intermediate hinge means having a longitudinal intermediate axis (7) substantially able to allow one unit (1) to tilt sideways transversally with respect to the other
**characterised in that** said side-hinging means comprise furthermore a transverse hinge means (51), said transverse hinge means having a transverse rotational coupling (51) substantially able to allow one unit (1) to rotate with respect to the other and wherein in front and/or rear of each unit, arm means are provided (2), said arm means being equipped with free-advance magnetic track (M) supported by respective free-rotating wheels (23-24).

2. Robot according to the preceding claim, **characterised in that** said front and/or rear magnetic-sole track arms are equipped with spring means to maintain said magnetic advance track in contact with a respective front or rear pathway.

3. Robot according to claims 1 and 2, **characterised in that** said front and/or rear arm track-supporting wheels (2,23-24) are conceived as a double couple of free oscillating tandem wheels with an intermediate axis (22), in order to allow the respective magnetic track (M) to incline freely, according to the contacting surface, independently of the surface on which the main magnetic of the core robot tracts unit (1) lie.

## Patentansprüche

1. Roboter zur Behandlung und/oder Bearbeitung von Oberflächen oder Außenteilen von großen Stahlstrukturen, als Kettenfahrzeug für die Bewegung mit magnetischen Sohlen (m) auf Ketten, mit zwei unabhängigen Antriebseinheiten (1), die in einer mittleren Lage in Längsrichtung seitlich miteinander gelenkig verbunden sind, mit dazugehörigem Seiten-Scharnierteil (6-7), das mindestens ein Längs- Zwischenscharnierteil mit einer Längs-Zwischenachse (7) umfasst, die im wesentlichen dafür sorgt, dass die eine Einheit (1) seitlich quer in bezug auf die andere kippen kann,
**gekennzeichnet dadurch, dass** besagte Seiten-Scharnierteile darüberhinaus ein querlaufendes Scharnierteil (51) umfassen, das eine querlaufende Rotationskupplung (51) aufweist, die im wesentlichen dafür sorgt, dass die eine Einheit (1) in bezug auf die andere rotieren kann, und wobei vor und/oder hinter jeder Einheit Arme vorgesehen (2) sind, die mit frei vorrückenden Magnetkette (M) ausgestattet ist, die von frei rotierenden Rädern (23-24) getragen werden.

2. Roboter nach dem vorigen Anspruch, **gekennzeichnet dadurch, dass** die vorderen und/oder hinteren Magnetsohlenkettenarme mit Federmitteln ausgestattet sind, um besagte magnetische vorrückende Kette in Kontakt mit einer vorderen oder hinteren Bahn zu halten.

3. Roboter nach Anspruch 1 und 2, **gekennzeichnet dadurch dass** die kettentragenden Vorder- und/oder Hinterarm-Räder (2,23-24) als ein doppeltes Paar von frei schwingenden Tandemrädern mit einer Zwischenachse (22) konzipiert sind, damit die betreffende Magnetbahn (M) sich frei neigen kann, entsprechend der Kontaktfläche, unabhängig von der Oberfläche, auf welcher der Hauptmagnet der Kemroboterketten-Einheit (1) liegt.

## Revendications

1. Robot pour traiter et/ou usiner des surfaces ou des pièces externes dans de grandes structures d'acier, ledit robot étant du type chenillé pour son mouvement avec des semelles magnétiques (M) sur les chenilles dudit robot chenillé, comprenant deux mécanismes de commande indépendants (1) articulés longitudinalement latéralement l'un à l'autre dans une position intermédiaire avec des éléments d'articulation latéraux respectifs (6-7), lesdits éléments d'articulation latéraux comprenant au moins un moyen d'articulation longitudinal intermédiaire ayant un axe longitudinal intermédiaire (7) substantiellement capable de permettre à un mécanisme de commande (1) de s'incliner latéralement transversalement par rapport à l'autre **caractérisé en ce que** lesdits éléments d'articulation latéraux comprennent en plus un moyen d'articulation transversal (51), ledit moyen d'articulation transversal ayant un couplage en rotation transversal (51) substantiellement capable de permettre à un élément moteur (1) de tourner par rapport à l'autre et dans lequel devant et/ou derrière chaque élément de commande, des bras sont pourvus (2), lesdits bras étant équipés avec une chenille magnétique à avancement libre (M) supportée par des roues à rotation libre respectives (23-24).

2. Robot selon la revendication précédente, **caractérisé en ce que** lesdits bras de chenille à semelle magnétique antérieure et/ou postérieure sont équipés avec des moyens de ressort pour maintenir ladite chenille d'avancement magnétique en contact avec une trajectoire respective antérieure ou postérieure.

3. Robot selon les revendications 1 et 2, **caractérisé en ce que** lesdites roues de support de chenille (2,23-24) du bras antérieur et/ou postérieur sont conçues comme un couple double deroues tandem à oscillation libre avec un axe intermédiaire (22), afin de permettre à la respective chenille magnétique (M) de s'incliner librement, conformément à la surface en contact, indépendamment de la surface sur laquelle reposent les aimants principaux des mécanismes de commande du robot central (1).
